# EUROPÄISCHE PATENTSCHRIFT

(11) **EP 3 380 292 B1**
(45) Veröffentlichungstag und Bekanntmachung des Hinweises auf die Patenterteilung: **13.01.2021**
(21) Anmeldenummer: 16791564.4
(22) Anmeldetag: 03.11.2016
(51) Int. Cl.: B29B 11/16

(54) **HERSTELLUNG VON TEXTILVERBUNDMATERIALVORFORMLINGEN**
PRODUCTION OF TEXTILE COMPOSITE MATERIAL PREFORMS
PRODUCTION DE PRÉFORMES À BASE DE MATIÈRE COMPOSITE TEXTILE

(30) Priorität: 26.11.2015 DE 102015223364
(43) Veröffentlichungstag der Anmeldung: 03.10.2018
(73) Patentinhaber: Bayerische Motoren Werke Aktiengesellschaft, 80809 München (DE)
(72) Erfinder: BADERSCHNEIDER, Jörg, 84166 Adlkofen (DE); HONICKEL, Eva, 84174 Eching (DE); MAI, Horst, 84095 Furth (DE); SCHADE, Mirko, 84032 Landshut (DE)
(86) Internationale Anmeldenummer: PCT/EP2016/076489
(87) Internationale Veröffentlichungsnummer: WO 2017/089086

(56) Entgegenhaltungen:
- EP-A1- 2 474 410
- DE-A1-102010 022 168
- DE-A1-102010 030 009
- DE-A1-102010 030 009
- DE-A1-102013 005 163
- DE-A1-102013 005 163
- DE-A1-102013 009 046
- DE-A1-102013 103 039
- DE-A1-102014 205 479

## Beschreibung

Die vorliegende Erfindung betrifft ein Verfahren zum Herstellen von Textilverbundmaterialvorformlingen, insbesondere mit oder aus einem oder mehreren textilen Halbzeugen.

Bei bekannten Verfahren zum Herstellen von Textilverbundmaterialvorformlingen wird das zu Grunde liegende Textilverbundmaterial nach Art einer Flächenstruktur bereitgestellt und einem Prozess des - insbesondere trockenen - Formpressens unterzogen. Erst nach dem trockenen Formpressen werden die die Textilverbundmaterialvorformlinge bildenden Abschnitte der formgepressten Flächenstruktur aus dem Verbund herausgetrennt und vereinzelt.

Dabei ist nachteilig, dass ein erheblicher Anteil an bereits formgepresstem Material als Materialrest, vom jeweiligen Textilverbundmaterialvorformling abgetrennt, entsteht und dass dieser Materialrest in aufwendiger Art und Weise recycelt werden muss. Dies erhöht den prozesstechnischen Aufwand und Energieeintrag bei derartigen Verfahren.

Die DE 10 2013 103 039 A1 betrifft eine Vorrichtung und ein Verfahren zur mehrstufigen Herstellung eines dreidimensionalen Vorformlings aus zumindest zwei Schichtgelegen und/oder Teilvorformlingen im Zuge der Herstellung von faserverstärkten Formteilen, mit zumindest einer Drapiervorrichtung und einer Transportvorrichtung für die Schichtgelege und/oder Teilvorformlingen, wobei die Drapiervorrichtung zumindest umfasst eine Drapierform für die Fasergelege und zur Drapierform verfahrbare Drapierstempel zur Umformung und/oder Fixierung der Schichtgelege und/oder der Teilvorformlingen entsprechend der Kontur der Drapierform. Zumindest ein Schichtgelege und/oder ein Teilvorformling mittels der Transportvorrichtung in eine Drapierform eingelegt wird, dass das oder die Schichtgelege mittels Drapierstempel entlang der Kontur der Trapezform umgeformt werden und dass die Verfahrensschritte so lange wiederholt werden, bis aus den ungeformten Schicht gelegen und/oder den Teilvorformlingen ein Vorformling zusammengestellt ist.

Die DE 10 2010 030 009 A1 beschreibt ein Umformverfahren zum Herstellen eines mehrdimensional profilierten Vorformlings aus einem vorimprägnierten oder bindemittelvernetzten, multidirektionalen Faserverbundmaterial, mit einem oberen und einem unteren, in der Schließlage einen dem Vorformling entsprechend profilierten Formspalt zwischen sich begrenzenden Werkzeugteil sowie einem diese umgreifenden, das Faserverbundmaterial beim Schließen der Werkzeugteile reibschlüssig nachführbar fixierenden Spannrahmen wird eine hinsichtlich einer Falten- oder einer anderen Fehlstellenbildung deutlich erhöhte Fertigungsqualität der Vorformlinge dadurch erreicht, dass die Werkzeugteile zum Ausgleich des Materialüberschusses an den schwächer profilierten Formspaltbereichen mit in der Randbeschnittzone des Vorformlings angeordneten, einen synchron zur Schließbewegung der Werkzeugteile ab Beginn der Materialumformung zunehmend sickenförmigen Durchzugsspalt für das Faserverbundmaterial zwischen sich begrenzenden Formstücken versehen und/oder die Spannfläche des Spannrahmens gegenüber der Einlauffläche eines der Werkzeugteile in der Umformens Phase derart Höhen versetzt wird, dass an dieser eine Ziehkante für das in den Formspalt Nachfließen der Faserverbundmaterial gebildet wird.

Die DE 10 2013 005 163 A1 betrifft ein Verfahren zur Herstellung eines Vorformlings aus einem Faserhalbzeug mit den Schritten Ablegen eines Faserhalbzeugs auf einer Ablagefläche, Fixieren des Faserhalbzeugs auf der Ablagefläche mit einer Mehrzahl entlang eines Umfangs des Faserhalbzeugs segmentartig angeordneter Niederhalter, Vordrapieren des Faserhalbzeugs in einer Kavität eines Drapierwerkzeugs zwischen einem Unterwerkzeug und einem Oberwerkzeug, indem das Unterwerkzeug und/oder das Oberwerkzeug derart verlagert wird bzw. werden, dass das Drapierwerkzeug in eine Vorschließstellung gebracht wird, Ergreifen des Faserhalbzeugs durch eine Vielzahl von Manipulatoren, die entlang eines Umfangs des Faserhalbzeugs segmentartig - von einem Zentrum des Faserhalbzeugs aus gesehen - vor oder hinter den Niederhaltern angeordnet sind, Verlagern mindestens eines Manipulators, wobei lokal Membranspannungen in dem Faserhalbzeugs verändert werden, und Drapieren des Faserhalbzeugs und Herstellen des Vorformlings, in dem das Drapierwerkzeug in eine Schließstellung gebracht wird.

Die DE 10 2013 009 046 A1 offenbart ein Verfahren zum Umformen eines zweidimensionalen Faserhalbzeugs in eine zumindest bereichsweise dreidimensional geformte Vorform, mit Schritten des Auflegens eines Faserhalbzeugs auf eine Oberfläche eines in einer Ebene vorgespannten Netzes, welches als Träger fungiert, Verlagern eines Stempels auf das Faserhalbzeug zu, Mitnehmen des Faserhalbzeugs und des vorgespannten Netzes durch den Stempel, und Drängen des Faserhalbzeugs und des Netzes an eine Formfläche einer dem Stempel - in Wirkrichtung gesehen - gegenüber angeordneten Werkzeugform.

Die Druckschrift DE 10 2014 205 479 A1 offenbart ein Verfahren zur Herstellung eines Faservorformlings für ein Faserverbundbauteil, bei welchem eine Faseranordnung auf einem Trägerwerkstoff angeordnet wird und der Trägerwerkstoff bei einem Umformvorgang von einer Spanneinrichtung gehalten wird. Das Verfahren weist die Schritte Bereitstellen mindestens eines Zuschnitts aus einem Faserwerkstoff, Ausrichten des Zuschnitts entsprechend der Richtung der Belastung des Zuschnitts im Faserverbundbauteil mittels einer automatisierten Handhabungseinrichtung, Fixieren des Zuschnitts am Trägerwerkstoff, Bereitstellen des Trägerwerkstoffs mit fixiertem Zuschnitt für einen Nachfolgeprozess auf.

Die weitere Druckschrift DE 10 2010 022 168 A1 betrifft Verfahren und Vorrichtungen zum Umformen zweidimensionaler Faserhalbzeuge, Faser-Vorformlinge oder Faser-Kunststoff-Verbundbauteile.

Der Erfindung liegt daher die Aufgabe zu Grunde, ein Verfahren zum Herstellen von Textilverbundmaterialvorformlingen anzugeben, welches mit einem verringerten Material-und Energieeintrag Textilverbundmaterialvorformlinge besonders einfach und gleichwohl zuverlässig herstellen kann.

Die der Erfindung zu Grunde liegende Aufgabe wird bei einem Verfahren zum Herstellen von Textilverbundmaterialvorformlingen erfindungsgemäß mit den Merkmalen des unabhängigen Patentanspruches 1. Vorteilhafte Weiterbildungen sind jeweils Gegenstand der abhängigen Ansprüche.

Gemäß einem ersten Aspekt schafft die vorliegende Erfindung ein Verfahren zum Herstellen von Textilverbundmaterialvorformlingen, insbesondere mit oder aus einem oder mehreren textilen Halbzeugen oder textilen Verstärkungsstrukturen, z.B. mit oder aus kohlenstofffaserverstärkten Kunststoffmaterialien oder CFK-Materialien, durch Formpressen einer Flächenstruktur eines oder mehrerer Textilverbundmaterialien, bei welchem (i) die Flächenstruktur vor dem Formpressen lateral in Textilverbundmaterialabschnitte zugeschnitten oder allgemein vorkonfektioniert wird und (ii) die zugeschnittenen oder allgemein vorkonfektionierten Textilverbundmaterialabschnitte einzeln oder zu mehreren und insbesondere mit einem oder mehreren anderen Textilverbundmaterialabschnitten dem Formpressen unterzogen werden, um dadurch ganz oder teilweise einen oder mehrere Textilverbundmaterialvorformlinge auszubilden. Erfindungsgemäß findet vor dem eigentlichen Vorgang des Formpressens also eine Vorkonfektionierung der Flächenstruktur des einen oder der mehreren Textilverbundmaterialien statt, so dass nicht zu einem Textilverbundmaterialvorformling gehörende Materialreste in noch nicht gepresster Form anfallen und leichter und mit weniger Energieaufwand regenerier- und recyclebar sind. Nur die vorkonfektionierten Textilverbundmaterialabschnitte werden erfindungsgemäß der weiteren Verarbeitung durch Formpressen unterzogen.

Erfindungsgemäß wird dabei ein jeweiliger Textilverbundmaterialabschnitt vor dem Formpressen auf einem ersten Träger fixiert, welcher insbesondere ein Ausrichten, Vordrapieren und/oder Haltern des Textilverbundmaterialabschnittes beim Formpressen bewirkt oder unterstützt. Zunächst wird der jeweilige Träger durch führendes Vorspannen mittels eines nur den Träger berührenden und in seinem Inneren den jeweiligen Textilverbundmaterialabschnitt lateral umschließenden Führungsrahmens vordrapiert. Dann wird der jeweilige Textilverbundmaterialabschnitt entlang einer Kontur und/oder entlang einer Naht mittels eines Hauptspannrahmens und mittels Form und Gegenform dreidimensional gespannt und dadurch unter Druck, Zug und/oder Temperatur zu einem Textilverbundmaterialvorformling ausgebildet.

Im Sinne der Erfindung kann ein Textilverbundmaterialabschnitt auch als Stack oder CF-Stack bezeichnet werden und ein Textilverbundmaterialvorformling als Preform.

Um das Formpressen der vorkonfektionierten Textilverbundmaterialabschnitte besonders zuverlässig durchführen zu können, ist es gemäß einer vorteilhaften

Weiterbildung des erfindungsgemäßen Verfahrens vorgesehen, dass ein jeweiliger Textilverbundmaterialabschnitt vor dem Formpressen auf einem ersten Träger fixiert wird, welcher insbesondere ein Ausrichten, Vordrapieren, Haltern und/oder Einleiten der Kräfte für das Umformen des Textilverbundmaterialabschnittes beim Formpressen bewirkt oder unterstützt, wobei insbesondere (i) der Textilverbundmaterialabschnitt mit einer Unterseite flächig auf einer Oberseite des Trägers anliegt und/oder (ii) die Anordnung aus erstem Träger und Textilverbundmaterialabschnitt auf der Oberseite des ersten Trägers von einem zweiten Träger bedeckt und mit diesem verbunden wird.

Durch die zuletzt genannte Variante wird der Textilverbundmaterialabschnitt, also z.B. der CF-Stack, im Trägermaterial sandwichartig eingebettet. Der erste und zweite Träger können aus demselben Material oder verschieden sein. Auch ist es denkbar, dass nur ein Träger vorgesehen und zur Einbettung des Textilverbundmaterialabschnittes oder Stacks geteilt und dann wieder zusammenführt wird.

Alternativ oder zusätzlich kann es vorgesehen sein, dass auf einer Oberseite und auf einer Unterseite eines Trägers in geteilter Art und Weise ein Textilverbundmaterialabschnitt oder zwei Textilverbundmaterialabschnitte am Träger fixiert ist bzw. sind, insbesondere in zueinander bündiger Art und Weise, so dass im Enderzeugnis der Träger im Produkt verbleibt und so eine alternative Sandwichstruktur entsteht.

Das Fixieren auf dem Träger ermöglicht das Eintragen von Vorspannkräften auf den jeweiligen vorkonfektionierten Textilverbundmaterialabschnitt, ohne dass zusätzliches und kostenintensives Textilverbundmaterial für den Angriff der vorspannenden Kräfte zur Verfügung gestellt werden muss, wie dies herkömmlicherweise der Fall ist.

Dabei ist es von besonderem Vorteil, wenn ein hohes Maß an Komptabilität zwischen dem Material der Textilverbundmaterialabschnitte und dem Trägermaterial erzielt wird. Dies wird insbesondere dann erreicht, wenn gemäß einer anderen Ausgestaltungsform des erfindungsgemäßen Verfahrens ein jeweiliger Träger mit oder aus einem textilen Trägermaterial und/oder mit oder aus einem flächigen Material, insbesondere mit oder aus einer Folie, verwendet wird und/oder das Fixieren eines jeweiligen Textilverbundmaterialabschnittes auf dem Träger durch Nähen und Ausbilden mindestens einer Naht mit einem Nahtmaterial und/oder durch Kleben erfolgt. Das Fixieren kann auch durch andere Formen der Verbindung erfolgen und ist nicht auf Nähen und Kleben beschränkt.

Besonders einfache geometrische Verhältnisse für den Krafteintrag beim Vorspannen und Führen des Textilverbundmaterialabschnittes auf dem Träger stellten sich ein, wenn die mindestens eine Naht zumindest teilweise als Konturnaht und in der Nachbarschaft einer Kontur oder eines Randes des Textilverbundmaterialabschnittes ausgebildet wird.

Obwohl grundsätzlich eine einzelne Naht zum Fixieren des Textilverbundmaterialabschnittes auf dem Träger ausreichend ist, wobei dann eine Konturnaht von besonderem Vorteil ist, können auch mehrere Nähte zum Fixieren eines jeweiligen Textilverbundmaterialabschnittes auf einem Träger vorgesehen sein.

Alternativ oder zusätzlich zu einer Konturnaht bietet es sich an, dass die mindestens eine Naht zumindest teilweise zu einer Kontur des Textilverbundmaterialabschnittes beabstandet und/oder nicht parallel und insbesondere senkrecht zu dieser verlaufend ausgebildet wird. Auf diese Art und Weise kann eine besonders innige Fixierung des jeweiligen Textilverbundmaterialabschnittes auf dem Träger erreicht werden. Dies ist insbesondere bei der Ausgestaltung komplexerer dreidimensionaler Strukturen von Vorteil, weil dadurch Verwerfungen des Textilverbundmaterials vermieden werden.

Eine weitere Vereinfachung des erfindungsgemäßen Verfahrens lässt sich erreichen, wenn durch das Formpressen ein jeweiliger Träger und/oder das Nahtmaterial mit einem jeweiligen Textilverbundmaterialabschnitt als Bestandteil eines Textilverbundmaterialvorformlings verbunden werden. Bei dieser Ausgestaltungsform entfallen die Prozesse, die notwendig sind, um nach dem Formpressen das Trägermaterial von dem formgepressten Textilverbundmaterialabschnitt, also vom hergestellten Textilverbundmaterialvorformling zu lösen und zu separieren.

Alternativ dazu kann es bei einer anderen Ausführungsform des erfindungsgemäßen Verfahrens vorgesehen sein, dass nach dem Formpressen der jeweilige Träger von der Unterseite eines erzeugten Textilverbundmaterialvorformlings abgelöst wird, insbesondere durch Auftrennen etwaiger Nähte und/oder durch einen der Kontur oder der Naht folgenden Schnitt innerhalb oder diesseits der Naht.

Ein besonders zuverlässiges Formpressen und damit Ausbilden von Textilverbundmaterialvorformlingen stellt sich ein, wenn gemäß einer besonders bevorzugten Ausführungsform des erfindungsgemäßen Verfahrens (i) zunächst der jeweilige Träger durch führendes Vorspannen, insbesondere mittels eines nur den Träger berührenden und in seinem Inneren den jeweiligen Textilverbundmaterialabschnitt lateral umschließenden Führungsrahmens, vordrapiert wird und (ii) dann der jeweilige Textilverbundmaterialabschnitt entlang seiner Kontur und/oder entlang einer Naht, insbesondere mittels eines Hauptspannrahmens und/oder mittels Form und Gegenform dreidimensional gespannt und dadurch unter Druck, Zug und/oder Temperatur zu einem Textilverbundmaterialvorformling ausgebildet wird.

Ein besonders hohes Maß an Materialeinsparung in Bezug auf das vorzulegende Textilverbundmaterial ergibt sich dann, wenn das Zuschneiden - und das Vorkonfektionieren allgemein - abgestimmt wird in Bezug auf Dimensionen und/oder weitere Eigenschaften eines herzustellenden Textilverbundmaterialvorformlings und/oder einer zu verwendenden Kombination aus Hauptspannrahmen, Form und/oder Gegenform.

Gemäß einem weiteren Aspekt schafft die vorliegende Erfindung eine Vorrichtung zum Herstellen von Textilverbundmaterialvorformlingen, insbesondere mit oder aus einem oder mehreren textilen Halbzeugen, z.B. mit oder aus CFK-Materialien oder dergleichen, welche insbesondere eingerichtet ist, das erfindungsgemäße Verfahren auszuführen, mit einem äußeren Führungsrahmen zum äußeren Ausrichten, Vordrapieren und/oder Haltern eines auf einem Träger fixierten Textilverbundmaterialabschnittes durch Spannen des Trägers, einem inneren und dreidimensionalen Hauptspannrahmen und einer Formanordnung zum Ausformen des Textilverbundmaterialvorformlings durch Formpressen des durch den äußeren Führungsrahmen ausgerichteten, vordrapierten und/oder gehalterten Textilverbundmaterialabschnittes.

Die Formanordnung kann eine oder mehrere Formen und/oder Gegenformen aufweisen, die zum Zusammenwirken miteinander ausgebildet und betreibbar sind. Durch das Zusammenwirken von Form und Gegenform wird das Formpressen des Textilverbundmaterialabschnittes bewirkt.

Bei einer Mehrzahl von Formen und/oder Gegenformen können diese in der Vorrichtung von innen nach außen zeitlich abgestimmt kaskadierend betreibbar sein. Dies kann insbesondere mit einem oder nach Art eines Kaskadenschiebers erfolgen.

### Kurzbeschreibung der Figuren

Weitere Einzelheiten, Merkmale und Vorteile der Erfindung ergeben sich aus der nachfolgenden Beschreibung und den Figuren.
- Figuren 1 bis 4: zeigen in schematischer und geschnittener Seitenansicht verschiedene Zwischenzustände, welche bei einer Ausführungsform des erfindungsgemäßen Verfahrens zum Herstellen von Textilverbundmaterialvorformlingen erreicht werden.
- Figuren 5 und 6: zeigen in schematischer Draufsicht Teilaspekte einer anderen Ausführungsform des erfindungsgemäßen Verfahrens zum Herstellen von Textilverbundmaterialvorformlingen.
- Figuren 7 bis 10: zeigen in schematischer und geschnittener Seitenansicht Zwischenzustände, die bei einer anderen Ausführungsform des erfindungsgemäßen Verfahrens unter Verwendung einer Ausführungsform der erfindungsgemäßen Vorrichtung zum Herstellen von Textilverbundmaterialvorformlingen erreicht werden.
- Figuren 11 und 12: zeigen in schematischer und geschnittener Seitenansicht Aspekte der Verwendung einer erfindungsgemäßen Vorrichtung zum Herstellen von Textilverbundmaterialvorformlingen.
- Figuren 13 bis 18: illustrieren anhand schematischer Ansichten von oben auf erfindungsgemäß beim Herstellungsverfahren zu verwendende Flächenstrukturen erreichbare Materialeinsparungen.
- Figuren 19 bis 22: zeigen in schematischer und geschnittener Seitenansicht Zwischenzustände, die bei einem herkömmlichen Verfahren zum Herstellen von Textilverbundmaterialvorformlingen erreicht werden.

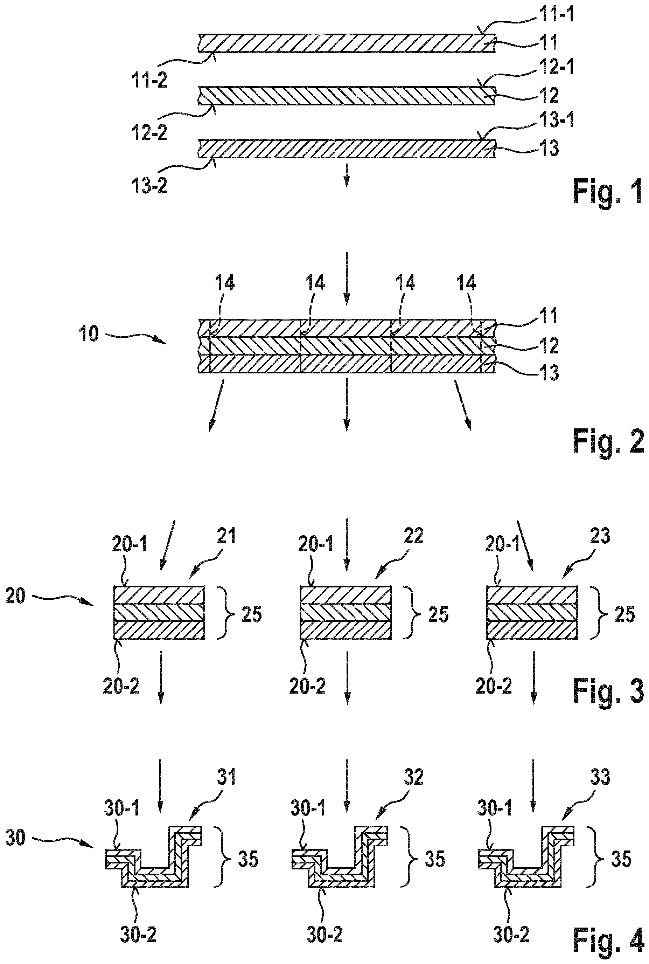

Nachfolgend werden unter Bezugnahme auf die Figuren 1 bis 18 Ausführungsbeispiele der Erfindung im Detail beschrieben. Gleiche und äquivalente sowie gleich oder äquivalent wirkende Elemente und Komponenten werden mit denselben Bezugszeichen bezeichnet. Nicht in jedem Fall ihres Auftretens wird die Detailbeschreibung der bezeichneten Elemente und Komponenten wiedergegeben.

Die dargestellten Merkmale und weiteren Eigenschaften können in beliebiger Form von einander isoliert und beliebig miteinander kombiniert werden, ohne den Kern der Erfindung zu verlassen.

Die Figuren 1 bis 4 zeigen in schematischer und geschnittener Seitenansicht Zwischenzustände bei der Herstellung von Textilverbundmaterialvorformlingen 30, die bei einer Ausführungsform des erfindungsgemäßen Verfahrens erreicht werden.

Gemäß Figur 1 werden bei dieser Ausführungsform drei Lagen von Textilverbundmaterialien 11, 12 und 13 als im Wesentlichen flächenhafte Gebilde vorgelegt.

Dabei ist die Anzahl von drei Lagen nur beispielhaft gewählt. Es sind beliebige andere Anzahlen denkbar. So kann zum Beispiel auch eine einzelne Lage eines einzelnen Textilverbundmaterials erfindungsgemäß verarbeitet werden.

Die einzelnen Textilverbundmaterialien 11, 12 und 13 können paarweise verschieden oder identisch sein, und zwar sowohl in materieller als auch in struktureller Hinsicht. Es kann sich z.B. um dieselben Grundmaterialien, aber mit verschiedener Anordnung und/oder Ausrichtung, z.B. von Fasern, handeln.

Jede Lage eines Textilverbundmaterials 11, 12, 13 besitzt eine Oberseite 11-1, 12-1, 13-1 und eine der Oberseite gegenüberliegende Unterseite 11-2, 12-2 beziehungsweise 13-2.

Im Übergang zu dem in Figur 2 gezeigten Zwischenzustand wird aus der Mehrzahl der Lagen von Textilverbundmaterialien 11, 12, 13 durch Übereinanderlegen und entsprechendes Drapieren eine Flächenstruktur 10 gebildet.

Im Übergang zu dem in Figur 3 dargestellten Zwischenzustand wird dann erfindungsgemäß zunächst ein Trennen oder eine Vereinzelung der Flächenstruktur 10 aus Textilverbundmaterialien 11, 12, 13 in eine Mehrzahl von Textilverbundmaterialabschnitten 20 gebildet, hier beispielhaft mit einem ersten, zweiten und dritten Textilverbundmaterialabschnitt 21, 22 bzw. 23. Diese weisen jeweils eine Oberseite 20-1 und eine Unterseite 20-2 und eine dazwischen verlaufende Kontur 25 auf, die auch als Rand bezeichnet werden kann.

Im Folgenden werden die ersten bis dritten Textilverbundmaterialabschnitte 21 bis 23 nicht immer einzeln genannt, sondern stellvertretend durch den allgemeinen Textilverbundmaterialabschnitt 20 bezeichnet.

Im Übergang zu dem in Figur 4 dargestellten Zwischenzustand werden dann die Textilverbundmaterialabschnitte 20 einzeln oder gemeinsam, jedoch bereits als vereinzelte Struktur, einem Vorgang des Formpressens unterzogen, um einen jeweiligen Textilverbundmaterialvorformling 30, nämlich einen ersten, zweiten und dritten Textilverbundmaterialvorformling 31, 32 bzw. 33 mit einer Oberseite 30-1 und einer Unterseite 30-2 sowie einer Kontur 35 oder einem Rand auszubilden.

Die Abfolge der Figuren 1 bis 4 zeigt rein schematisch einen Kerngedanken der Erfindung, nämlich aus der vorgegeben Flächenstruktur 10 der Textilverbundmaterialmaterialien 11, 12, 13 zunächst Textilverbundmaterialabschnitte 20 zu vereinzeln und erst dann der Verarbeitung durch Formpressen zu unterziehen. Dadurch wird erfindungsgemäß das Anfallen von Materialresten weitestgehend vermieden, wie durch die in Figur 2 angedeuteten Schnittlinien 14 in der Flächenstruktur 10 der Textilverbundmaterialmaterialien 11, 12, 13 angedeutet wird, welche im Übergang zum Zustand der Figur 3 zu den Konturen 25 der einzelnen Textilverbundmaterialabschnitte 20 führt.

Eine der Zielsetzungen beim erfindungsgemäßen Konzept ist Kostenreduzierung durch die Reduzierung der Materialeinsatzquote. Kerngedanken sind dabei (i) die Fixierung der textilen Verstärkungsstruktur, also des zugeschnittenen Textilverbundmaterialabschnittes 20, der auch als Stack bezeichnet wird, auf dem kostengünstigeren Material des Trägers 40 und (ii) die nachfolgende Faserumformung mit Kaskadenschiebern, insbesondere von innen nach außen fixiert, sowie (iii) das Doppelspannrahmenprinzip, nämlich mit äußerem Führungsrahmen 55 und innerem und dreidimensionalem Hauptspannrahmen 70 des Werkzeuges der zu Grunde liegenden Vorrichtung 50, damit der Kraftschluss für die Umformung gewährleistet bleibt.

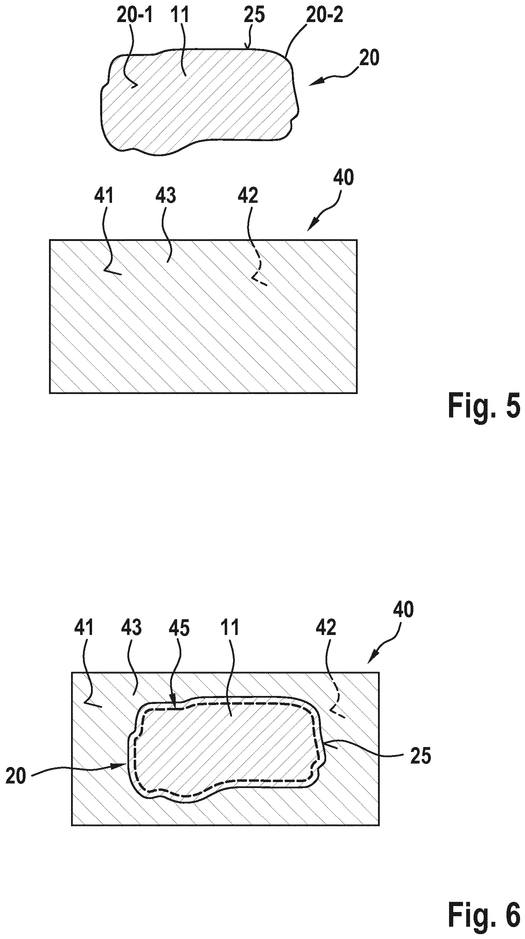

Die Figuren 5 und 6 zeigen in Draufsicht in schematischer Art und Weise Aspekte von Zwischenzuständen, die bei einer anderen Ausführungsform des erfindungsgemäßen Verfahrens zum Herstellen von Textilverbundmaterialvorformlingen erreicht werden.

Gemäß Figur 5 wird bei dieser Ausführungsform des erfindungsgemäßen Verfahrens zunächst ein vereinzelter Textilverbundmaterialabschnitt 20 aus einem Textilverbundmaterial 11 mit einer Oberseite 20-1 und einer Unterseite 20-2 sowie einer Kontur 25 oder einem Rand vorgelegt.

Des Weiteren wird ein Träger 40 aus einem Trägermaterial 43 mit einer Oberseite 41 und einer Unterseite 42 bereitgestellt.

Im Übergang zu dem in Figur 6 dargestellten Zwischenzustand wird dann der Textilverbundmaterialabschnitt 20, der auch als Stack bezeichnet werden kann, mit seiner Unterseite 20-2 auf die Oberseite 41 des Trägers 40 aufgelegt und über eine Naht 45 aus einem Nahtmaterial 46 an der Oberseite 41 des Trägers 40 fixiert. Dabei folgt der Verlauf der Naht 45 im Wesentlichen und lokal parallel dem Verlauf der Kontur 25 des Textilverbundmaterialabschnittes 20 oder des Stacks.

Durch das Fixieren des Textilverbundmaterialabschnittes 20 auf dem Träger 40 ist es wie bisher, jedoch mit geringerem Materialaufwand im Hinblick auf das Textilverbundmaterial 11, möglich, in definierter Art und Weise entsprechende Zugkräfte beim Vordrapieren, Ausrichten und/oder Haltern des Textilverbundmaterialabschnittes aufzuprägen, und zwar über einen entsprechenden Angriff auf das Trägermaterial 43 des Trägers 40 selbst, also ohne dass zusätzliches Textilverbundmaterial bereitgestellt werden muss.

Die in Figur 6 dargestellte Anordnung aus Träger 40 und darauf fixiertem Textilverbundmaterialabschnitt 20 wird dann dem zu Grunde liegenden Vorgang des Formpressens unterzogen, um aus dem am Träger 40 fixierten Textilverbundmaterialabschnitts 20 einen Textilverbundmaterialvorformling 30 auszuformen.

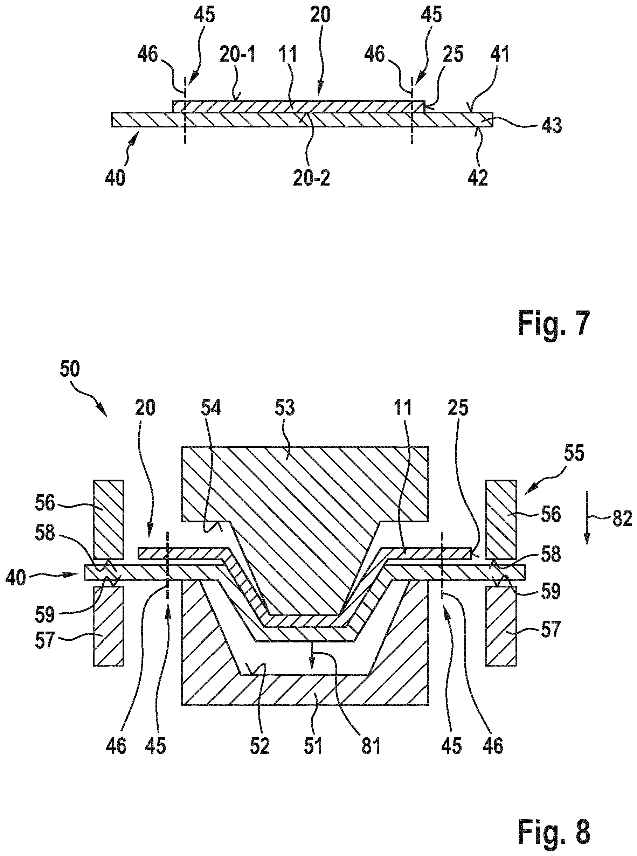

Die Figuren 7 bis 10 zeigen in schematischer und geschnittener Seitenansicht Aspekte einer anderen Ausführungsform des erfindungsgemäßen Herstellungsverfahrens, und zwar unter Verwendung einer Vorrichtung 50 zum Herstellen von Textilverbundmaterialvorformlingen 30.

Die Darstellung der Figur 7 zeigt in etwa die Situation der Figur 6. Vorgelegt wird ein Träger 40 mit einer Oberseite 41, auf welcher ein Textilverbundmaterialabschnitt 20 über eine Naht 45 mit einem Nahtmaterial 46 fixiert ist. Dabei liegt die Unterseite 20-2 des Textilverbundmaterialabschnittes 20 auf der Oberseite 41 des Trägers 40 auf. Der Träger 40 besteht aus einem Trägermaterial 43, welches vorzugsweise ebenfalls ein textiles Material ist, dies ist jedoch nicht zwingend.

Der Textilverbundmaterialabschnitt 20 als solcher besteht aus einem Textilverbundmaterial 11 und besitzt neben der Unterseite 20-2 zur Anlage auf der Oberseite 41 des Trägers 40 selbst eine Oberseite 20-1 und eine Kontur 25, die auch als Rand bezeichnet werden kann.

Im Übergang zu dem in Figur 8 dargestellten Zwischenzustand wird die flächenstrukturartig ausgebildete Anordnung aus Träger 40 mit darauf fixiertem Textilverbundmaterialabschnitt 20 in eine Vorrichtung 50 zum Herstellen eines Textilverbundmaterialvorformlings eingebracht.

Die erfindungsgemäße Vorrichtung 50 besteht dem Kern nach aus einer Form, die von einer ersten und unteren Teilform 51 mit Formfläche 52 und einer zweiten und oberen Teilform 53 mit Formfläche 54 gebildet wird.

Bei der Darstellung gemäß Figur 8 ist die Anordnung aus Träger 40 und Textilverbundmaterialabschnitt 20 bereits in das Innere der Formen 51 und 53 eingebracht.

Durch das Absenken der zweiten oder oberen Form 53 entlang der Pfeilrichtung 81 auf die erste oder untere Form 51 als Gegenform zu wird die Anordnung aus Träger 40 und Textilverbundmaterialabschnitt 20 entsprechend verformt. Dabei ist es wichtig, dass die Anordnung aus Träger 40 und Textilverbundmaterialabschnitt 20 ausgerichtet und fixiert wird, um eine vordefinierte Anlage zwischen den Formen 51 und 53 und einen definierten Krafteintrag zu gewährleisten.

Um dies zu gewährleiten, weist die erfindungsgemäße Vorrichtung 50 neben den Formen 51 und 53 einen Führungsrahmen 55 mit einem ersten oder oberen Rahmenabschnitt 56 mit einer Spannfläche 58 und einem zweiten und unteren Rahmenabschnitt 57 mit Spannfläche 59 auf.

Mit dem Beginn des Absenkens der zweiten Form 53 auf die erste Form 51 als Gegenform zu wird auch der Führungsrahmen 55 durch Absenken des ersten oder oberen Rahmenabschnittes 56 in Pfeilrichtung 82 auf den zweiten oder unteren Rahmenabschnitt 57 zu abgesenkt. Dabei wird zwischen den Spannflächen 58 und 59 der Rahmenabschnitte 56 und 57 der Träger 40, nicht jedoch der Textilverbundmaterialabschnitt 20, eingespannt und dadurch vordrapiert, ausgerichtet und/oder gehaltert.

Das nachfolgende und weitergehende Absenken der Form 53 auf die Form 51 als Gegenform zu führt dann zu einem wohldefinierten Krafteintrag und dem entsprechenden Umformprozess in Bezug auf den am Träger 40 fixierten Textilverbundmaterialabschnitt 20 und damit zur Ausformung des Textilverbundmaterialvorformlings 30.

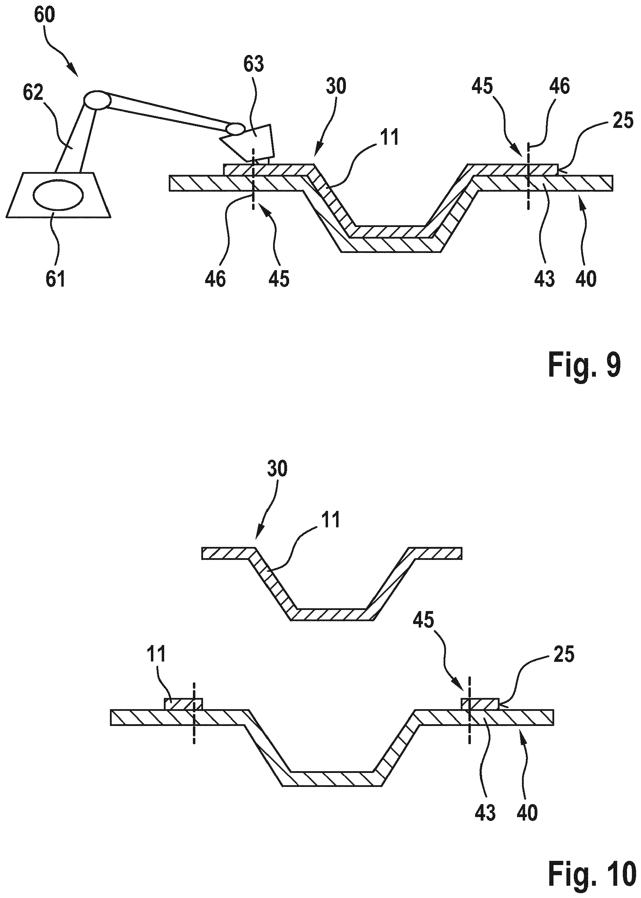

Nach dem Entfernen aus der Anordnung der Formen 51 und 53 liegt somit eine ausgeformte Struktur aus Träger 40 mit darauf noch fixiertem Textilverbundmaterialvorformling 30 vor, wie dies in Figur 9 dargestellt ist.

Durch Einsatz einer Beschnittvorrichtung 60 kann über eine Beschnitteinrichtung 63, welche über einen Arm 62 mit einem entsprechenden Sockel 61 verbunden ist, der eigentliche Textilverbundmaterialvorformling 30 aus der Fixierung am Träger 40 herausgelöst werden. Dies geschieht, indem z.B. diesseits oder auf der Innenseite der Naht 45 ein entsprechender Schnitt der Kontur 25 folgend ausgeführt wird.

Im Übergang zu dem in Figur 10 dargestellten Zwischenzustand kann dann nach Ausführung des Schnittes der eigentliche Textilverbundmaterialvorformling 30 aus der Anordnung vom Träger 40 gelöst werden.

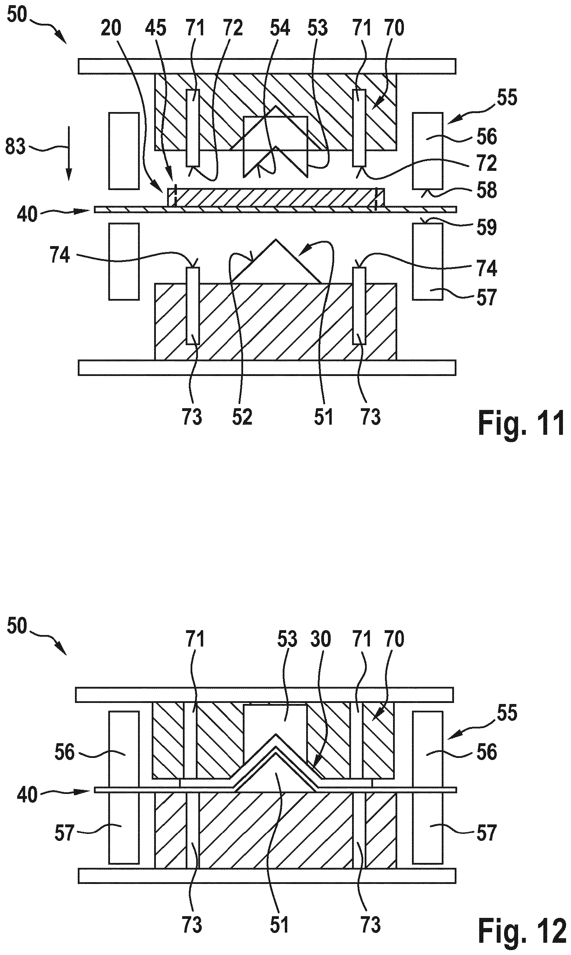

Die Figuren 11 und 12 zeigen in schematischer und geschnittener Seitenansicht Details bei der Verwendung einer anderen Ausführungsform der erfindungsgemäßen Vorrichtung 50 zum Herstellen von Textilverbundmaterialvorformlingen 30.

Dem Kern nach entspricht die Konfiguration der Vorrichtung 50 gemäß den Figuren 11 und 12 der Ausführungsform der erfindungsgemäßen Vorrichtung 50, wie sie im Zusammenhang mit der Figur 8 beschrieben wurde.

Zusätzlich ist bei der Ausführungsform der erfindungsgemäßen Vorrichtung 50 gemäß den Figuren 11 und 12 noch der dreidimensionale Hauptspannrahmen 70 im Detail dargestellt.

Bei der Ausführungsform gemäß Figur 8 dient der Führungsrahmen 55 mit den Rahmenabschnitten 56 und 57 ausschließlich dazu, durch Krafteintrag in den Träger 40, nicht jedoch in das Textilverbundmaterial 11 des Textilverbundmaterialabschnittes 20, die Anordnung aus Träger 40 und Textilverbundmaterialabschnitt 20 vorzudrapieren, auszurichten und/oder zu haltern. Dies ist bei der Ausführungsform der erfindungsgemäßen Vorrichtung 50 gemäß den Figuren 11 und 12 ebenfalls der Fall.

Zusätzlich ist es jedoch von Vorteil, wenn für einen höheren Krafteintrag ein eigentlicher und dreidimensionaler Hauptspannrahmen 70 mit einem ersten oder oberen Rahmenabschnitt 71 mit Spannfläche 72 und einem zweiten und unteren Rahmenabschnitt 73 mit Spannfläche 74 vorgesehen wird, wie er in Figur 11 dargestellt ist.

Die Rahmenabschnitte 71 und 73 sind so abgeordnet, dass sie beim Absenken in Pfeilrichtung 83 nicht zu einem ausschließlichen Vorspannen des Trägers 40, wie durch den Führungsrahmen 55 bewirkt, führen, sondern zu einem dreidimensionalen Krafteintrag auf den Textilverbundmaterialabschnitt 20 durch Fixieren des Textilverbundmaterialabschnittes 20 zwischen den Spannflächen 72 und 74 der ersten und zweiten Rahmenabschnitte 71 und 73, und zwar hier auf der Innenseite oder diesseits der Naht 45 und in direkter Nachbarschaft zu dieser und unter Zusammenwirken mit dem Einspannen zwischen den Formflächen 52 und 54 der ersten und zweiten Teilformen 51 bzw. 53.

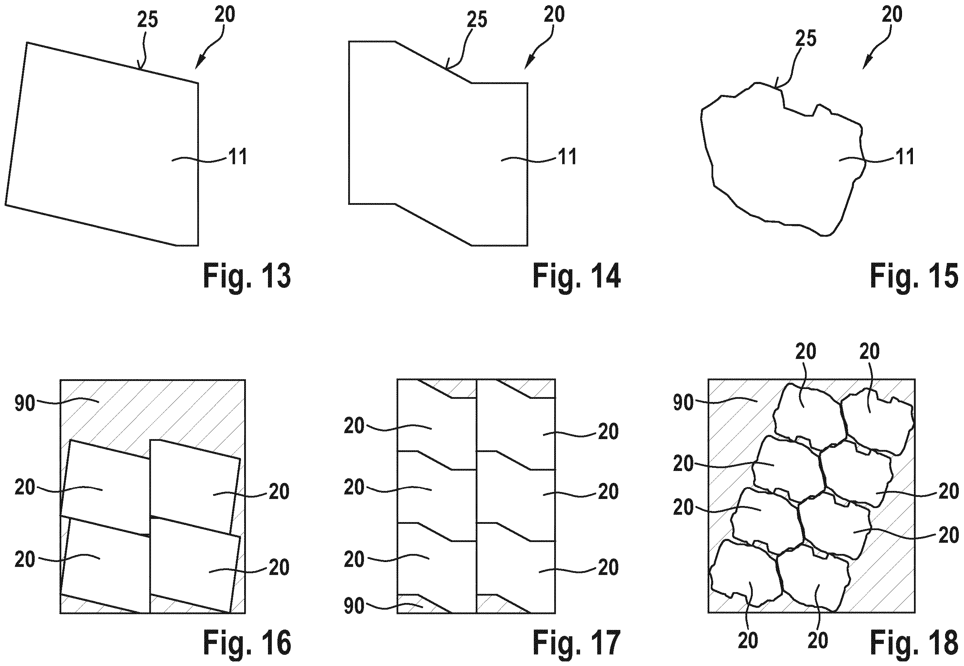

Die Figuren 13 bis 18 zeigen in schematischer Draufsicht, wie unterschiedliche Anteile an Restmaterial 90 erfindungsgemäß durch das dem Formprozess vorgeschaltete Vereinzeln der Textilverbundmaterialabschnitte 20 eingespart werden können.

Je nach Komplexität der Konturen 25 der einzelnen Textilverbundmaterialabschnitte 20 ergeben sich unterschiedliche Überdeckungsgrade oder Auslastungsgrade einer vorgelegten Bahn aus einem Textilverbundmaterial 11.

Beim herkömmlichen Vorgehen würde das Restmaterial 90, welches nicht zum Ausgestalten eines vollständigen Textilverbundmaterialvorformlings 30 ausreichen würde, zwar formgepresst und damit umgewandelt werden. Es müsste aber im Nachhinein aufwendig recycelt werden.

Durch das erfindungsgemäß vorgesehene und vorgeschaltete Vereinzeln der Textilverbundmaterialabschnitte 20 entsteht das Restmaterial 90 in nicht prozessierter Form und vor allem in geringerer Menge, so dass beim Recyclen Energie- und Zeitaufwand reduziert werden.

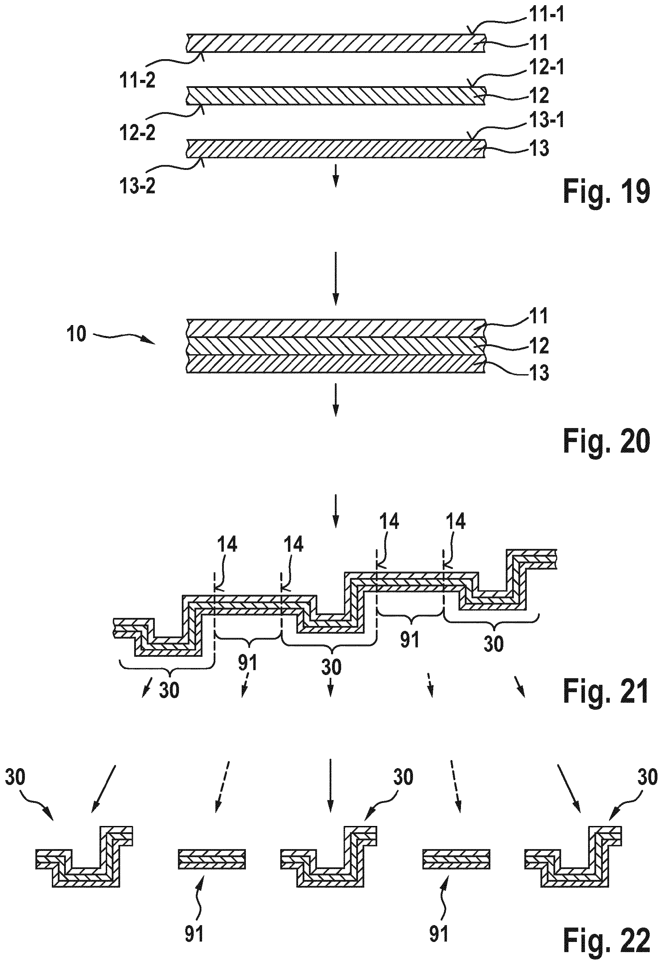

Die Figuren 19 bis 22 zeigen Zwischenzustände eines herkömmlich verwendeten Verfahrens zum Herstellen von Textilverbundmaterialvorformlingen 30.

Es werden bei diesem Beispiel drei Textilverbundmaterialien 11, 12 und 13 in Form von Bahnen mit Oberseiten 11-1, 12-1, 13-1 und Unterseiten 11-2, 12-2, 13-2 vorgelegt und gemäß Figur 20 Lage auf Lage nach Art einer Flächenstruktur 10 angeordnet.

Im Übergang zu dem in Figur 21 dargestellten Zwischenzustand wird dann ein Vorgang des Formpressens durchgeführt.

Dabei wird die gesamte Flächenstruktur 10 aus Textilverbundmaterialien 11, 12, 13 insgesamt oder sukzessive ausgeformt. Dabei entstehen Abschnitte, die in etwa den herzustellenden Textilverbundmaterialvorformlingen 30 entsprechen, aber noch in einem Verband miteinander mit Abschnitten von Materialresten 91 dazwischen verbunden sind.

Im Übergang zu dem in Figur 22 dargestellten Zwischenzustand werden dann an Trennlinien 14 die verschiedenen Textilverbundmaterialvorformlinge 30 voneinander unter Ablösung der Materialreste 91 vereinzelt.

Im Gegensatz zu dem erfindungsgemäßen Vorgehen, welches Materialreste 90 gemäß den Figuren 16 bis 18 in nicht prozessierter Form liefert, die leicht zu recyceln sind, sind die Materialreste 91 gemäß den Figuren 21 und 22 bereits dem Formpressvorgang unterzogen und daher nur mit höherem Aufwand an Zeit und Energie wiederverwertbar.

Diese und weitere Merkmale und Eigenschaften der vorliegenden Erfindung werden an Hand der folgenden Darlegungen weiter erläutert:
Die Herstellung von Faserverbundbauteilen kann mit folgenden Einzelschritten erfolgen.
- Stackherstellung, bestehend aus Einzellagen von CF-Textilien,
- Faservorformung nach Art einer Preform und mittels eines zweischaligen Umformwerkzeuges mit Spannrahmen in einer Umformpresse,
- Konfektionierung mittels einer Vorlagevorrichtung, in der die verschiedenen Preforms zueinander gelegt und ausgerichtet werden,
- Injektionsprozess mittels eines zweischaligen Umformwerkzeuges mit Injektionsanlage zur Imprägnierung in einer Formpresse.

Folgende Nachteile sind dabei zu nennen:
- Die Außenkontur des CF-Zuschnittes ist geometrisch nur einfach gestaltet, z.B. durch Polygonzug, Rechteck usw., um Verschnitt nicht im Übermaß anfallen zu lassen.
- Die Materialart der Einzellagen ist begrenzt, da nur Halbzeuge direkt von der Rolle verarbeitet werden können.
- Die Winkelorientierung des Zuschnittes ist abhängig von der ausgehenden Winkelorientierung des Halbzeuges.
- Eingeschränkte Integration von Bauteilen, da eine Variabilität, z. B. durch die Einbringung von Patches, in einem Produkt nicht darstellbar ist.
- Hoher Materialeinsatz wegen Zusatzflächen für Einleitung der Rückhaltekräfte über die Spannrahmen.
- Preformüberlappungen sind einfach und stellen eine Schwachstelle im Verbund dar.

Erfindungsgemäß sollen CF-Zuschnitte, also Textilverbundmaterialabschnitte 20, zu einem Faservorformling 30 verarbeitet werden, die in einem vorgelagerten Prozess der Vernähung auf ein kostengünstiges Trägermaterial 43 eines Trägers 40 aufgenäht werden. Die Verarbeitung eines so gebildeten Hybridstacks erfolgt anschließend in einem Faservorformwerkzeug 51, 53 einer entsprechenden Vorrichtung 50.

Das Preform-WZG 50 ist mit einem äußeren Führungsrahmen 55 ausgestattet, der den Hybridstack 20 im WZG während der WZG-Schließbewegung über den Träger 40 mit dem Trägermaterial 43 vordrapiert.

Nach der Vordrapierung erfolgt während der weiteren Schließbewegung der Formen 51, 53 des Werkzeuges eine Materialübernahme durch einen innen liegenden und dreidimensionalen Hauptspannrahmen 70, am CF-Zuschnitt des jeweiligen Textilverbundmaterialabschnittes 20. Hier erfolgt auch die Ausformung des Zuschnittes des jeweiligen Textilverbundmaterialabschnittes 20 zur Preform oder zum Textilverbundmaterialvorformling 30.

Während der Ausformung setzen weiterhin in einer Kaskadenanordnung innen liegende WZG-Schieber auf, die eine Fixierung der Fasermatten von innen zum äußeren Bereich des Preformlings ermöglichen.

Die Krafteinleitung mit Umformung erfolgt über die Kaskade Führungsrahmen 55, Träger 40 mit Trägermaterial 43, Vernähung mit Nacht 45, CF-Zuschnitt des Textilverbundmaterialabschnittes 20, Kaskadenschieber.

Folgende Vorteile stellen sich ein:
- Reduzierung von Materialeinsatz und somit Reduzierung von Materialkosten,
- Erhöhung der Produktvielfalt und Schaffung von drei Freiheitsgraden für komplexere Bauteile,
- Verbesserung der Qualitätsergebnisse, Reduzierung von Merkmalsausprägungen, und
- Reduzierung von Merkmalsstreuungen, stabile und robuste Prozesse.

### Bezugszeichenliste:

- 10: Flächenstruktur
- 10-1: Oberseite
- 10-2: Unterseite
- 11: Textilverbundmaterial
- 11-1: Oberseite
- 11-2: Unterseite
- 12: Textilverbundmaterial
- 12-1: Oberseite
- 12-2: Unterseite
- 13: Textilverbundmaterial
- 13-1: Oberseite
- 13-2: Unterseite
- 14: Schnittlinie, Schnittkante

- 20: Textilverbundmaterialabschnitt
- 20-1: Oberseite
- 20-2: Unterseite
- 21: (erster) Textilverbundmaterialabschnitt
- 22: (zweiter) Textilverbundmaterialabschnitt
- 23: (dritter) Textilverbundmaterialabschnitt
- 25: Kontur, Rand

- 30: Textilverbundmaterialvorformling
- 30-1: Oberseite
- 30-2: Unterseite
- 31: (erster) Textilverbundmaterialvorformling
- 32: (zweiter) Textilverbundmaterialvorformling
- 33: (dritter) Textilverbundmaterialvorformling
- 35: Kontur, Rand
- 40: Träger, Trägermaterial
- 41: Oberseite
- 42: Unterseite
- 43: Trägermaterial
- 45: Naht
- 46: Nahtmaterial

- 50: Vorrichtung
- 51: (erste, untere) Halbform, Teilform, Form
- 52: (erste) Formfläche
- 53: (zweite, obere) Halbform, Teilform, Gegenform
- 54: (zweite) Formfläche

- 55: Führungsrahmen
- 56: (erster, oberer) Rahmenabschnitt
- 57: (zweiter unterer) Rahmenabschnitt
- 58: Spannfläche
- 59: Spannfläche

- 60: Beschnittvorrichtung
- 61: Sockel
- 62: Arm
- 63: Beschnitteinrichtung

- 70: (dreidimensionaler) Hauptspannrahmen
- 71: (erster, oberer) Rahmenabschnitt
- 72: Spannfläche
- 73: (zweiter unterer) Rahmenabschnitt
- 74: Spannfläche
- 81: Richtung des Absenkens
- 82: Richtung des Absenkens
- 83: Richtung des Absenkens

- 90: Materialrest
- 91: Materialrest

## Patentansprüche

1. Verfahren zum Herstellen von Textilverbundmaterialvorformlingen (30), insbesondere mit oder aus einem oder mehreren textilen Halbzeugen, durch Formpressen einer Flächenstruktur (10) eines oder mehrerer Textilverbundmaterialien (11, 12, 13), bei welchem:
- die Flächenstruktur (10) vor dem Formpressen lateral in Textilverbundmaterialabschnitte (20-23) zugeschnitten wird,
- die zugeschnittenen Textilverbundmaterialabschnitte (20-23) einzeln oder zu mehreren und insbesondere mit einem oder mehreren anderen Textilverbundmaterialabschnitten dem Formpressen unterzogen werden, um dadurch ganz oder teilweise einen oder mehrere Textilverbundmaterialvorformlinge (30) auszubilden,
- ein jeweiliger Textilverbundmaterialabschnitt (20-23) vor dem Formpressen auf einem ersten Träger (40) fixiert wird, welcher insbesondere ein Ausrichten, Vordrapieren und/oder Haltern des Textilverbundmaterialabschnittes (20-23) beim Formpressen bewirkt oder unterstützt,
- zunächst der jeweilige Träger (40) durch führendes Vorspannen mittels eines nur den Träger (40) berührenden und in seinem Inneren den jeweiligen Textilverbundmaterialabschnitt (20-23) lateral umschließenden Führungsrahmens (55) vordrapiert wird und
- dann der jeweilige Textilverbundmaterialabschnitt (20-23) entlang einer Kontur (25) und/oder entlang einer Naht (45) mittels eines Hauptspannrahmens (70) und mittels Form (51) und Gegenform (53) dreidimensional gespannt und dadurch unter Druck, Zug und/oder Temperatur zu einem Textilverbundmaterialvorformling (30) ausgebildet wird.

2. Verfahren nach Anspruch 1, bei welchem:
(i) der Textilverbundmaterialabschnitt (20-23) mit einer Unterseite (20-2) flächig auf einer Oberseite (41) des ersten Trägers (40) anliegt,
(ii) die Anordnung aus erstem Träger (40) und Textilverbundmaterialabschnitt (20-23) auf der Oberseite (41) des ersten Trägers (40) von einem zweiten Träger bedeckt und mit diesem verbunden wird und/oder
(iii) auf einer Oberseite (41) und auf einer Unterseite (42) eines Trägers (40) in geteilter Art und Weise der Textilverbundmaterialabschnitt (20-23) oder zwei Textilverbundmaterialabschnitte (20-23) am Träger (40) fixiert ist bzw. sind, insbesondere in zueinander bündiger Art und Weise.

3. Verfahren nach Anspruch 1 oder 2, bei welchem:
- ein jeweiliger Träger (40) mit oder aus einem textilen Trägermaterial und/oder mit oder aus einem flächigen Material, insbesondere einer Folie, verwendet wird und/oder
- das Fixieren eines jeweiligen Textilverbundmaterialabschnittes (20-23) auf dem Träger (40) durch Nähen und Ausbilden mindestens einer Naht (45) mit einem Nahtmaterial (46) und/der durch Kleben erfolgt.

4. Verfahren nach Anspruch 3, bei welchem die mindestens eine Naht (45) zumindest teilweise als Konturnaht und in der Nachbarschaft einer Kontur (25) des Textilverbundmaterialabschnittes (20-23) ausgebildet wird.

5. Verfahren nach einem der vorangehenden Ansprüche, bei welchem die mindestens eine Naht (45) zumindest teilweise als zu einer Kontur (25) des Textilverbundmaterialabschnittes (20-23) beabstandet und/oder nicht parallel und insbesondere senkrecht zu dieser verlaufend ausgebildet wird.

6. Verfahren nach einem der vorangehenden Ansprüche, bei welchem durch das Formpressen ein jeweiliger Träger (40) und/oder das Nahtmaterial (46) mit einem jeweiligen Textilverbundmaterialabschnitt (20-23) als Bestandteil eines Textilverbundmaterialvorformlings (30) verbunden wird.

7. Verfahren nach einem der vorangehenden Ansprüche, bei welchem nach dem Formpressen der jeweilige Träger (40) von der Unterseite (32) eines erzeugten Textilverbundmaterialvorformlings (30) abgelöst wird, insbesondere durch Auftrennen etwaiger Nähte (45) und/oder durch einen der Kontur (25) oder der Naht (45) folgenden Schnitt innerhalb der Naht (45).

8. Verfahren nach einem der vorangehenden Ansprüche, bei welchem das Zuschneiden abgestimmt wird in Bezug auf Dimensionen und/oder weitere Eigenschaften eines herzustellenden Textilverbundmaterialvorformlings (30) und/oder einer zu verwendenden Kombination aus Hauptspannrahmen (70), Form (51) und/oder Gegenform (53).

## Claims

1. Method for producing textile composite material preforms (30), in particular comprising or made from one or a plurality of textile semi-finished products, by compression-moulding a planar structure (10) of one or a plurality of textile composite materials (11, 12, 13), wherein:
- the planar structure (10) prior to compression-moulding is laterally cut into textile composite material portions (20-23);
- the cut textile composite material portions (20-23) individually or as a plurality thereof, and in particular conjointly with one or a plurality of other textile composite material portions, are subjected to compression-moulding so as to on account thereof fully or partially configure one or a plurality of textile composite material preforms (30);
- a respective textile composite material portion (20-23) prior to compression-moulding is fixed to a first carrier (40) which in particular effects or facilitates aligning, pre-draping, and/or mounting of the textile composite material portion (20-23) in the compression-moulding;
- the respective carrier (40) is first pre-draped by pre-tensioning in a guiding manner, by means of a guide frame (55) that contacts only the carrier (40) and in the interior of said guide frame (55) laterally encloses the respective textile composite material portion (20-23); and
- the respective textile composite material portion (20-23) along a contour (25) and/or along a seam (45), by means of a main stentering frame (70) and/or by means of the mould (51) and the counter-mould (53), is then tensioned in a three-dimensional manner and on account thereof, under pressure, traction, and/or temperature, is configured so as to form a textile composite material preform (30).

2. Method according to Claim 1, wherein:
- (i) the textile composite material portion (20-23) by way of a lower side (20-2) bears in a planar manner on an upper side (41) of the first carrier (40);
- (ii) the assembly of a first carrier (40) and of the textile composite material portion (20-23) on the upper side (41) of the first carrier (40) is covered by a second carrier and connected to said second carrier; and/or
- (iii) the textile composite material portion (20-23) or two textile composite material portions (20-23) is/are fixed to the carrier (40) in a separate manner on an upper side (41) and on a lower side (42) of a carrier (40), in particular in a manner so as to be flush with one another.

3. Method according to Claim 1 or 2, wherein:
- a respective carrier (40) comprising or made from a textile carrier material and/or comprising or made from a planar material, in particular a film, is used; and/or
- the fixing of a respective textile composite material portion (20-23) to the carrier (40) is performed by stitching and configuring at least one seam (45) having a seam material (46), and/or by adhesive bonding.

4. Method according to Claim 3,
wherein the at least one seam (45) is at least partially configured as a contour seam and so as to be in the vicinity of a contour (25) of the textile composite material portion (20-23).

5. Method according to one of the preceding claims, wherein the at least one seam (45) is at least partially configured so as to be spaced apart from a contour (25) of the textile composite material portion (20-23) and/or so as not to be parallel with said contour (25) and in particular so as to run perpendicularly to said contour (25).

6. Method according to one of the preceding claims, wherein a respective carrier (40) and/or the seam material (46) are/is connected to a respective textile composite material portion (20-23) as a component part of a textile composite material preform (30) by the compression-moulding.

7. Method according to one of the preceding claims, wherein the respective carrier (40) after the compression-moulding is released from the lower side (32) of a textile composite material preform (30) generated, in particular by unpicking any potential seams (45) and/or by way of a cut within the seam (45) that follows the contour (25) or the seam (45) .

8. Method according to one of the preceding claims, wherein the cutting-to-size is adapted in terms of dimensions and/or further properties of a textile composite material preform (30) to be produced, and/or of a combination of a main stentering frame (70), a mould (51) and/or a counter-mould (53) to be used.

## Revendications

1. Procédé de production de préformes à base de matière composite textile (30), en particulier comportant un ou plusieurs produits semi-finis textiles ou constitués de ceux-ci, par moulage par compression d'une structure plane (10) d'une ou plusieurs matières composites textiles (11, 12, 13), dans lequel :
- la structure plane (10) est, avant le moulage par compression, découpée latéralement en portions de matière composite textile (20-23),
- les portions de matière composite textile découpées (20-23) sont, individuellement ou en tant que pluralité, et en particulier avec une ou plusieurs autres portions de matière composite textile, soumises au moulage par compression, afin de former ainsi complètement ou partiellement une ou plusieurs préformes à base de matière composite textile (30),
- une portion de matière composite textile respective (20-23) est, avant le moulage par compression, fixée à un premier support (40), lequel produit ou facilite en particulier une orientation, un prédrapage et/ou un support de la portion de matière composite textile (20-23) lors du moulage par compression,
- tout d'abord le support respectif (40) est prédrapé par précontrainte avec guidage au moyen d'un cadre de guidage (55) ne venant en contact qu'avec le support (40) et entourant latéralement, dans son intérieur, la portion de matière composite textile respective (20-23) et
- ensuite la portion de matière composite textile respective (20-23) est tendue de manière tridimensionnelle le long d'un contour (25) et/ou le long d'une couture (45) au moyen d'un cadre de tension principal (70) et au moyen d'un moule (51) et d'un contremoule (53) et est ainsi formée en une préforme à base de matière composite textile (30) par compression, traction et/ou sous l'effet de la température.

2. Procédé selon la revendication 1, dans lequel :
(i) la portion de matière composite textile (20-23) repose, par un côté inférieur (20-2), à plat sur un côté supérieur (41) du premier support (40),
(ii) l'ensemble constitué du premier support (40) et de la portion de matière composite textile (20-23), sur le côté supérieur (41) du premier support (40), est recouvert par un deuxième support et est relié à celui-ci et/ou
(iii) sur un côté supérieur (41) et sur un côté inférieur (42) d'un support (40), de manière séparée, la portion de matière composite textile (20-23) ou deux portions de matière composite textile (20-23) est ou sont fixée(s) au support (40), en particulier de manière alignée les uns avec les autres.

3. Procédé selon la revendication 1 ou 2, dans lequel :
- un support respectif (40) comportant une matière de support textile ou constitué de celle-ci et/ou comportant une matière plane ou constitué de celle-ci, en particulier une feuille, est utilisé et/ou
- la fixation d'une portion de matière composite textile respective (20-23) sur le support (40) s'effectue par couture et formation d'au moins une couture (45) avec un matériau de couture (46) et/ou par collage.

4. Procédé selon la revendication 3, dans lequel l'au moins une couture (45) est formée au moins partiellement en tant que couture de contour et à proximité d'un contour (25) de la portion de matière composite textile (20-23).

5. Procédé selon l'une des revendications précédentes, dans lequel l'au moins une couture (45) est formée au moins partiellement de manière espacée d'un contour (25) de la portion de matière composite textile (20-23) et/ou de manière à s'étendre non parallèlement et en particulier perpendiculairement à celui-ci.

6. Procédé selon l'une des revendications précédentes, dans lequel, grâce au moulage par compression, un support respectif (40) et/ou le matériau de couture (46) sont reliés à une portion de matière composite textile respective (20-23) en tant que composant d'une préforme à base de matière composite textile (30).

7. Procédé selon l'une des revendications précédentes, dans lequel, après le moulage par compression, le support respectif (40) est détaché du côté inférieur (32) d'une préforme à base de matière composite textile produite (30), en particulier en décousant des coutures éventuelles (45) et/ou par une découpe, suivant le contour (25) ou la couture (45), à l'intérieur de la couture (45).

8. Procédé selon l'une des revendications précédentes, dans lequel la découpe est adaptée en termes de dimension et/ou d'autres propriétés d'une préforme à base de matière composite textile à produire (30) et/ou d'une combinaison, à utiliser, d'un cadre de tension principal (70), d'un moule (51) et/ou d'un contremoule (53).
